# EUROPEAN PATENT SPECIFICATION

(11) **EP 4 220 668 B1**
(45) Date of publication and mention of the grant of the patent: **13.08.2025**
(21) Application number: 22305097.2
(22) Date of filing: 28.01.2022
(51) Int. Cl.: H01B 9/02, H01B 7/26, H01B 7/14, H02G 1/10

(54) **HIGH VOLTAGE AC CABLE**
HOCHSPANNUNGSWECHSELSTROMKABEL
CÂBLE HAUTE TENSION CA

(43) Date of publication of application: 02.08.2023
(73) Proprietor: Nexans, 92400 Courbevoie (FR)
(72) Inventor: OLSEN, Espen, 1784 HALDEN (NO); HOVDE, Martin, 1712 GRALUM (NO)
(74) Representative: Acapo Onsagers AS

(56) References cited:
- EP-A1- 3 333 995
- WO-A1-2020/029409
- CN-U- 203 931 561

## Description

### FIELD OF THE INVENTION

The present invention relates to a high voltage AC cable.

### BACKGROUND OF THE INVENTION

High voltage alternating current (HVAC) cable systems comprise a conductor located at the centre of the cable, for delivering an electric current. The conductor is usually surrounded by plurality of layers arranged radially outside of the conductor, where each layer has a specific function. A first layer arranged over the conductor may comprise cross-linked polyethylene (XLPE), providing electrical insulation. Arranged radially outside of the XLPE layer there may be provided a metallic sheath, for electrically shielding and protecting the conductor from abrasion, corrosion and moisture. The current flowing through the conductor induces an electromotive force in the metallic sheath surrounding the conductor, and if the sheath forms a closed circuit, a circulating current will be generated in the metallic sheath. This circulating current results in power loss and generation of heat in the metallic sheath, causing the temperature of the cable system to increase.

An increase of temperature can lead the cable insulation to deteriorate. Therefore, the amount of current a cable can carry before deteriorating is restricted by a temperature rating. Commonly, the maximum allowable temperature of a HVAC conductor is 90° Celsius for XLPE insulation. The term ampacity is used to describe the conductor's capacity to carry current whilst staying within its temperature rating.

The ampacity of the cable will be dependent on a number of different factors such as the ambient temperature, the electrical current in the cable, the electrical resistance of the cable and the heat dissipating properties of the surroundings. The electrical current is a fixed requirement, specified by how much power the cable needs to deliver, and it is usually not an option to reduce this parameter. The ambient temperature and heat dissipating properties of the surroundings are often hard to affect, and the other specifications of the cable must therefore be adapted to these relatively inflexible factors to be able to deliver the required amount of electric current without exceeding its ampacity.

High voltage cable systems are often required to traverse stretches of water, resulting in relatively large variations in the heat dissipating properties of the cable's surroundings. These submarine cables are typically buried at shallow soil depths on the bottom of the seafloor, where water penetrates the soil surrounding the cable. The water provides the surroundings of the submarine cable with relatively favourable heat dissipating properties, dissipating heat far better than e.g. air and other types of soil. Parts of the submarine cable can also rest on the seafloor, or stretch through a body of water. In these cases, the environment of the submarine cable will have as good, if not better heat dissipating properties compared to being buried below the seafloor.

When the cable is brought ashore, it may either pass an underground region where the soil is not saturated with water, it may be brought along a surface of the ground, it may be provided elevated on a frame in the air or it may pass through a submarine region with inferior heat dissipating properties. Typically, if the cable passes an underground region, it may lie inside a horizontal directional drilling (HDD) pipe which has been provided in this region. In all these cases, the landfall region will usually have reduced heat dissipating properties, resulting in a so-called thermal bottleneck. To retain the same ampacity of the cable in the thermal bottleneck as in the submarine region, it is necessary to adapt certain specifications of the cable system.

Previous solutions to this bottleneck problem have been to provide a large increase of the cross-sectional area of the conductor in the landfall region, giving a decrease in the electrical resistance of the conductor. However, due to the tendency of an alternating electric current (AC) to become distributed within a conductor such that the current density is largest near the surface of the conductor, the cross-sectional area must be drastically increased if the ampacity is to be maintained without exceeding set thermal restrictions. Increasing the cross-sectional area of the conductor has many negative effects: it requires substantially more material, such as copper, leading to an increase in production costs. Often the increase of the cross-sectional area is so large that production is not practically possible. An increased cross-sectional area of the conductor also leads to significantly higher sheath losses. Handling a submarine cable with a large cross-sectional area also presents a multitude of problems due to added weight and size of the cable, requiring corresponding dimensioning of systems on board a cable-laying vessel.

WO2016/082860 discloses a cable with conductor sections with different cross-sectional layout that are thermally joined. The cable comprises a conductor at its centre, and may comprise semiconductor layers around the conductor and one continuous outer sheath made of thermoplastic or thermosetting polymer enclosing the semiconductor layers. The cable may also comprise additional metallic sheaths.

The prior art partially solves the problem of having a conductor with a large cross-sectional area along the entire cable, as only the section of the cable located in the thermal bottleneck is fitted with a conductor with a larger cross-sectional area.

However, this still leaves a substantial section of the cable system with a conductor of an undesirably large cross-sectional area.

Document WO 2020/029409 A1 discloses a lightweight 66 kV XLPE insulated optical fiber composite AC submarine cable.

Document CN 203 931 561 U discloses a water-blocking steel wire armored submarine cable.

EP 3 333 995 A1 describes a subsea HVAC cable system comprising a cable having a plurality of cores. Each core comprises a conductor, a first insulating layer, a second electrically conducting layer and a third layer. The cable comprises two sections, connected at a connection point CP. A first section of the cable is arranged to be exposed to a landfall area and a second section of the cable is arranged to be exposed to a submarine area. The cable is arranged such that circulating currents are prevented or reduced in the second conductive layers of the cable in the section exposed to the landfall area, thus assisting in maintaining the ampacity of the cable in this section without, or by reducing, the need to increase the cross-sectional area of the cable in the landfall area. This is accomplished by electrically connecting the second conductive layers of the cores to each other at the connection point. At a distal end of the first section of the cable, the second layers are arranged to leave an open ended termination, thus avoiding a closed circuit that would otherwise create circulating currents in the second layers of the first section, thus maintaining ampacity.

The object of the present invention is to improve deficiencies of the prior art subsea HVAC cable system described in EP 3 333 995.

### SUMMARY OF THE INVENTION

The present invention relates to a high voltage AC cable according to claim 1.

The term "high voltage" is used herein to refer to voltages above 52 kV, such as 52 kV - 1200 kV. The term "high voltage" may also refer to voltages above 115 kV, such as 115 -1200 kV.

In one aspect, the first section is adapted to being exposed to a landfall region.

In one aspect, the cable comprises three cable cores.

In one aspect, the third layer of the first section is an electrically insulating layer or a semi-conductive layer.

In one aspect, the electrically conducting layers of each core are physically in contact with each other at one or several points of contact.

In one aspect, the electrically conducting layers of each core are physically in contact with each other along the length of the first subsection.

In one aspect, the second layers are terminated as an open ended termination at a distal end of the first section of the cable.

In one aspect, the electrically conducting layer comprises a metallic tape wound helically outside of the third layer of the first subsection.

In one aspect, the electrically conducting layer comprises a metallic mesh applied outside of the third layer of the first subsection.

Alternatively, the electrically conducting layer may be extruded radially outside of the third layer of the first subsection. In yet an alternative, the electrically conducting layer may be provided by by folding a metallic foil around the cable section and then joining the metallic foil by longitudinal welding.

In one aspect, the first subsection of the second section has a length of typically 1 - 500 meters.

In one aspect, the length of the first subsection of the second section will be determined from case to case.

In one aspect, the first subsection and the second subsection of the cable are joined with a factory performed splice or joint at the connection point. Alternatively, the first subsection and the second subsection of the cable are joined with a field performed splice or joint at the connection point.

According to the above, as the semiconductive third layer of the first subsection is in electrical contact with its underlying second layer, the electrically conducting layer will electrically connect the second layers of each core to each other via the electrically semiconducting layers.

According to the above, the metal strip used in prior art to connect the second layers of the respective cores to each other at the connection point may be omitted. Also the connection of the metal strip in prior art to ground may be omitted.

In one aspect, the electrically conducting layer is corrosion resistant.

The electrically conducting layer may be configured to tolerate repetitive expansion and contraction due to thermal expansion as a consequence of heat generated by current flowing through the high voltage AC cable.

According to the above electrically conducting layer, it is achieved that the currents induced in the second, electrically conducting layer of each core are collected and brought to the points of contact between the respective cores. The electrically conducting layer will increase the phase-to-phase conductance and hence keep the voltage built up driven by the induced current electromotive force lower than what would be the case without said metallic layer.

The term sea is used herein to denote any body of water, such as lake, river, ocean etc.

The term seafloor is used to describe the bottom surface or floor of any body of water.

The term landfall position is used to describe a position where the cable passes an imaginary vertical line, the vertical line being located through the shoreline. The landfall position thus marks the separation between a seaside-portion and a land-side portion of the cable.

The term sea-side portion is used to describe the portion of the cable running from the landfall position and out under the sea.

The term land-side portion is used to describe the portion of the cable running from the landfall position and in to land.

The term connection point denotes a point where two sections of the cable are connected, in particular where the second layers of each core are electrically connected to each other, and thus marks the boundary between a first and second section of the cable. The connection point may for example be arranged at a distance of 0-4 kilometres from the landfall position, though this distance is determined by where the cable enters a landfall region from a submarine region, and where the relative difference in heat dissipating properties of the environment creates a so called thermal bottleneck. The connection point could therefore also be located at a distance of 50 meters to 1 kilometre from the landfall position, or from 1-2 kilometres, or from 2-3 kilometres, or from 3-4 kilometres, or from 1-3 kilometres.

The term submarine area or submarine region denotes the area/region where the cable is arranged on the bottom of the seafloor, running through the body of water or buried in a distance beneath the seafloor, typically 1-5 metres. In the case where the system is buried 1-5m beneath the seafloor, the soil is saturated with water. Thus, in all instances the cable is in contact with water when it passes through a submarine region, providing a beneficial heat dissipating environment. The submarine region typically lies beyond the connection point out to sea, coinciding with the cable's second section, that is from 0-4 kilometres from the shoreline and extending further out.

The term landfall area or landfall region is used to describe the area/region where the cable experiences a thermal bottleneck, due to inferior heat dissipating properties of the environment compared to the submarine region. In the landfall region the cable typically has passed from an adjacent submarine region. The landfall region may comprise a region where the cable is buried around 5-15m below either a seafloor or land surface. At a depth of 5-15m the soil is usually not saturated with water, therefore the surroundings of the cable have less beneficial heat dissipating properties. The term landfall region may also include a region lying inside a horizontal directional drilling (HDD) pipe, where the cable will be separated from contact with water. The term landfall region may also be used to denote a region where the cable lies on a land surface, is elevated in the air or lies on the seabed e.g. where the cable approaches a shoreline. In parts of the landfall region the cable may be partly in contact with water. The defining characteristic of the landfall region is that it provides a less heat dissipating environment than the submarine region. The landfall region typically lies from the connection point and extends in to the land-side portion, coinciding with the cable's first section.

The term single-end bonding as used herein means a configuration in which one end of a cable's sheath is grounded, or kept at zero potential. The opposite end of the sheath is not grounded, this end therefore being called the open end. This configuration thereby prevents currents circulating in the sheath as there is no closed circuit, instead a standing voltage appears and increases linearly along the length of the sheath away from the grounded end.

The term open ended termination is used to denote the open end of a cable sheath in a single-end bonding configuration.

The term transient events is used to describe power surges in the cable system.

These transient events can occur due to a number of different reasons, including external events such as lightning.

### DETAILED DESCRIPTION

Embodiments of the present invention will now be described in detail with reference to the enclosed drawings, where:
Fig. 1 illustrates a cross section of a prior art high voltage AC cable;
Fig. 2 illustrates a cross section of the first subsection of the second section of the cable in a first embodiment;
Fig. 3 illustrates the first and second sections of one of the cores schematically;
Fig. 4 illustrates the first and second sections of three cores schematically;

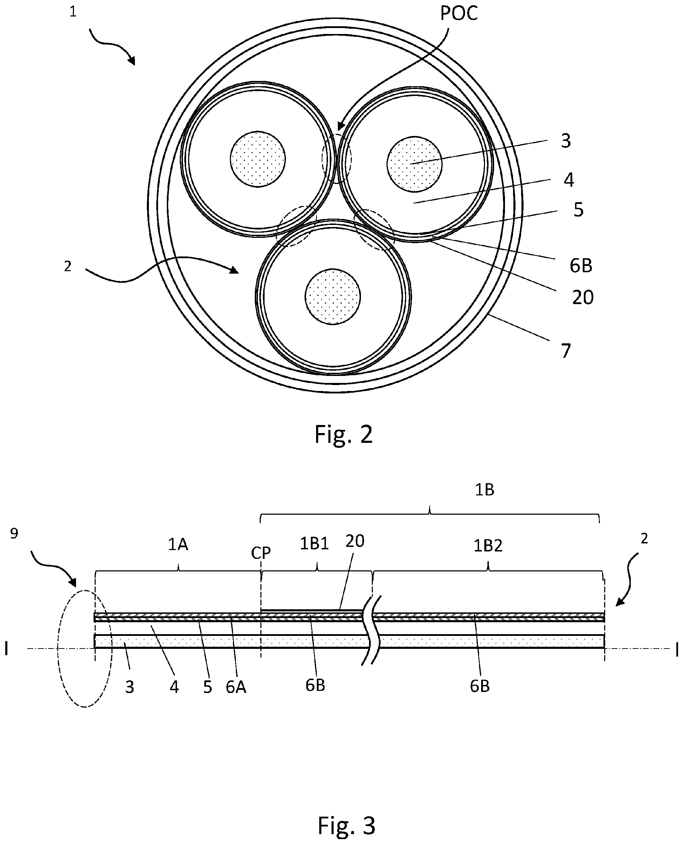

It is now referred to fig. 2 and 3.

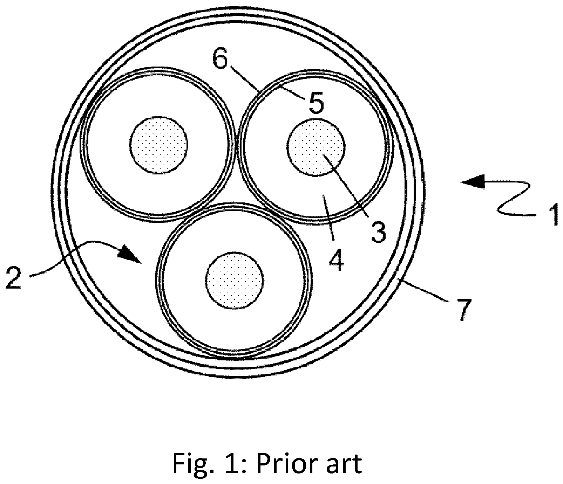

Similar to the high voltage AC cable shown in fig. 1, the high voltage AC cable 1 shown in fig. 2 and 3 comprises a three cable cores 2, one for each phase. The respective cores 2 are preferably identical to each other.

Each cable core 2 comprises a central, electrical conductor 3, a first, electrically insulating layer 4 arranged radially outside of the electrical conductor 3 and a second, electrically conducting layer 5 arranged radially outside of the first layer 4. The conductor 3 may comprise copper or aluminium, or alloys of these, as will be known to the person skilled in the art. The electrically insulating layer 4 commonly comprises a cross-linked polyethylene (XLPE) material and is arranged to electrically insulate the conductor 3. The electrically conducting layer 5 commonly comprises a metallic sheath, arranged to electrically shield and protect the conductor from abrasion, corrosion and moisture. The metallic sheath may comprise lead, copper or other metals and alloys known to the person skilled in the art.

The plurality of cores 2 form a core bundle which is surrounded by at least one reinforcing layer 7. In the case that there is plurality of reinforcing layers 7, an outer reinforcing layer may comprise an armouring layer adapted for mechanical protection of the core bundle. The armouring layer may comprise metallic wires, braid, sheath or low loss armour. These variations in the armouring material and construction are familiar to the person skilled in the art. The armouring layer may extend across parts of the cable.

It should be noted that the cable 1, and variations thereof, may comprise additional layers and filling material arranged radially outside each conductor and the core bundle not described further herein. These layers and materials may be arranged inside, in-between or outside the already mentioned layers herein, and may comprise for example additional insulating, semiconducting, conducting, shielding and armouring layers as is well known in the art. In the case of that these layers comprise conducting or semiconducting material, they may be arranged to ground a third semiconducting layer 6 to the outside environment of the cable 1.

In fig. 3, a cross section in the longitudinal direction of a cable core 2 is shown. It should be noted that the central axis of the core 2 is indicated as the dashed line I-I. Due to symmetry, Fig. 3 is simplified by only showing the layers above the central axis I-I.

Fig. 3 shows that the core 2, and hence the cable 1, has two sections, a first section 1A and a second section 1B. The first section 1A of the cable 1 is connected to a second section 1B of the cable 1 at a connection point CP.

The second cable section 1 B is intended and thus arranged to be exposed to a submarine region. Due to the cable's second section 1B being in contact with water in the submarine region, this surrounding environment provides relatively favourable heat dissipating properties. The conductor's 3 cross sectional area in the second section 1B may therefore be minimised whilst retaining a relatively high ampacity.

The first cable section 1A is intended and thus arranged to be exposed to a landfall region. Due to relatively less favourable heat dissipating properties in the landfall region, the conductor's 3 cross sectional area in the first section 1A may therefore need to be slightly larger than the conductor's cross sectional area in the second area 1B for the cable to be able to retain its ampacity.

However, it is important to note that due to the effect of the present invention as discussed below, any increase in conductor 3's cross sectional area in section 1B relative to the first section 1A, will be minimized compared to the prior art.

Each cable core 2 comprises a third layer generally referred to with reference number 6, provided radially outside of the second, electrically conducting layer 5. The third layer of the first cable section 1A is referred to with reference number 6A, while the third layer of the second cable section 1B is referred to with reference number 6B.

The third layer 6A of the first cable section 1A is an electrically insulating layer or a semi-conductive layer. The third layer 6B of the second cable section 1B is a semi-conductive layer. The electrically insulating material commonly comprises an insulating polyethylene arranged to insulate each of the second electrically conducting layers 5. The electrically semiconducting material typically comprises a semiconducting polyethylene arranged to electrically connect the each of the second layers 5 to each other and to any further outlying layers or material of the cable.

According to one aspect of the invention, the first cable section 1A and second cable section 1 B may be joined at the connection point with a factory-performed splice. According to another aspect, the sections may be joined by a field-performed joint at the connection point CP.

It is now referred to fig. 3 again. Here, it is shown that second cable section 1B comprises two subsections, a first subsection 1B1 and a second subsection 1B2. The first subsection 1B1 is proximal to the connection point CP and the second subsection 1B2 is distal to the connection point CP.

Each core 2 of the first subsection 1B1 comprises an electrically conducting layer 20 arranged radially outside of the third layer 6B.

As shown in fig. 2, the electrically conducting layers 20 of each core 2 are electrically connected to each other, as the electrically conducting layers 20 of each core 2 are physically in contact with each other at points of contact POC indicated as dashed ellipses. It should be noted that in the present embodiment, there is no single point of contact for all three cores. However, two and two cores 2 share one point of contact POC. Still, the electrically conducting layers 20 of the cores 2 are all in electrical contact with each other. The electrically conducting layers 20 of each core 2 are physically in contact with each other along the length of the first subsection 1B1.

The length of the first subsection 1B1 will typically be somewhere between 1 - 500 meters. It should be noted that when referring to the length of the first subsection 1B1, it is referred to the length of the second section 1B having the electrically conducting layer 20. As the second section 1B typically may have a length of several hundred kilometres, the length of the first subsection 1B1 will typically be much shorter than the total length of the second section 1B. It should however be noted that the length of the first subsection 1B1 is not dependent on the length of the second section 1B alone, it will determined from installation to installation based on cable properties, such as cable dimensions (such as conductor diameter, insulation diameter etc), the properties of the layers 5 and 6, materials of the different layers. The length of the first subsection 1B1 may also be dependent on operation parameters such as nominal currents/voltages, frequency of AC voltage etc.

The electrically conducting layer 20 comprises a metallic tape wound helically outside of the third layer 6B of the first subsection 1B1. Alternatively, the electrically conducting layer 20 comprises a metallic mesh applied outside of the third layer 6B of the first subsection 1B1. In yet an alternative, the electrically conducting layer 20 may be extruded radially outside of the third layer 6B of the first subsection 1B1. The electrically conducting layer 20 is corrosion resistant.

Cables 1 with large diameter cores 2 caused by e.g. a large central conductor 3, and/or a thick insulating layer 4 adapted for high voltage use, also have a large metallic layer 5. For such large cable designs the solution in the above prior art have some deficiencies in that the voltage across and the power density within the electrically semi-conductive layer 6B at and near the point CP becomes too high. By introducing the electrically conducting layer 20 in subsection 1B1, the electrical conductance between adjacent power cores 2 becomes higher, thus reducing the voltage and power density within layer 6B. Hence, the electrically conducting layer 20 mitigates deficiencies in prior art.

The semiconductive third layer 6B of the first subsection 1B1 is in electrical contact with its underlying second layer 5 and is of course also in electrical contact with the layer 20. Hence, the electrically conducting layer 20 will electrically connect the second layers 5 of each core to each other via the electrically semiconducting layers 6B. Consequently, the metal strip used in prior art to connect the second layers 5 of the respective cores 2 to each other at the connection point CP may be omitted. Also the connection of the metal strip in prior art to ground may be omitted.

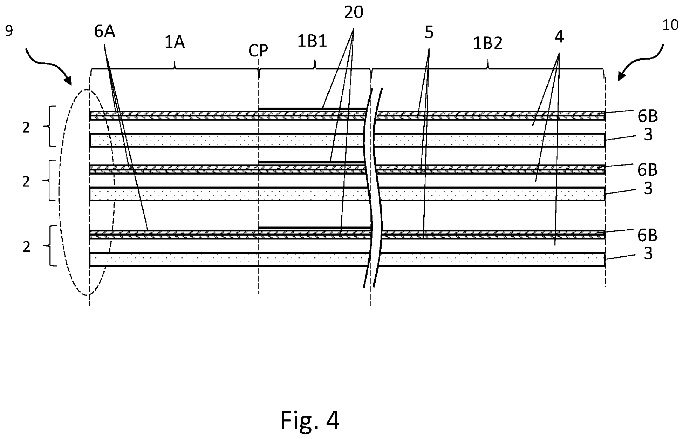

The end of the first cable section 1A distal to the connection point CP is indicated in fig. 4 with reference number 9. In similar way, the end of the second cable section 1B distal to the connection point CP is indicated with reference number 10.

It should be noted that the terminations of the distal ends 9, 10 are not shown in fig. 4, as the termination of these distal ends 9, 10 is considered known for the person skilled in the art.

The distal end 10 of the cable's second section 1B may, as an example, originate in a submarine cable landfall system, especially if the cable is arranged under a body of water between two shores. The submarine cable landfall system at the distal end 10 of the second section 1B may be a conventional landfall system, or it may be similar to the one described herein. However, several other different variations are possible, where the distal end 10 the cable's second section 1B may originate from a subsea unit, a ground-fast platform, a floating unit etc.

The invention is herein described in non-limiting embodiments and variations. A person skilled in the art will understand that there may be made alterations and modifications to the embodiments and variations that are within the scope of the invention as described in the attached claims.

### List of reference numbers

- 1: Cable
- 1A: First cable section
- 1B: Second cable section
- 1B1: first subsection of second cable section
- 1B2: second subsection of second cable section
- 2: Core
- 3: Conductor
- 4: First electrically insulating layer
- 5: Second electrically conducting layer
- 6: Third layer
- 6A: Third layer of first cable section
- 6B: Third layer of second cable section
- 7: Reinforcing layer
- 9: Distal end of first cable section
- 10: Distal end of second cable section
- 20: electrically conducting layer
- CP: Connection point

## Claims

1. A high voltage AC cable (1), wherein the cable (1) comprises a plurality of cable cores (2), wherein each cable core (2) comprises:
- a central, electrical conductor (3);
- a first, electrically insulating layer (4) arranged radially outside of the electrical conductor (3);
- a second, electrically conducting layer (5) arranged radially outside of the first layer (4);
- a third layer (6A, 6B) arranged radially outside of the second layer (5);
wherein a first section (1A) of the cable (1) is connected to a second section (1B) of the cable (1) at a connection point (CP),
wherein
- the first section (1A) is arranged to be exposed to a landfall region and the second cable section (1B) is arranged to be exposed to a submarine region;
- the second section (1B) comprises a first subsection (1B1) proximal to the connection point (CP) and a second subsection (1B2) distal to the connection point (CP);
- the third layer (6B) of the second section (1B) is a semi-conductive layer
**characterized in that**
- each cable core (2) comprises an electrically conducting layer (20) arranged radially outside of the third layer (6B) only in the first subsection (1B1) of the second section (1B) of the cable (1),
and **in that** the electrically conducting layers (20) of each core (2) are electrically connected to each other, the electrically conducting layers (20) are in direct contact with the third layer (6B), which is in contact with the second layer (5).

2. The high voltage AC cable (1) according to claim 1, wherein the third layer (6A) of the first section (1A) is an electrically insulating layer or a semi-conductive layer.

3. The high voltage AC cable (1) according to claim 1 or 2, wherein the electrically conducting layers (20) of each core (2) are physically in contact with each other at one or several points of contact (POC).

4. The high voltage AC cable (1) according to any of the above claims, wherein the electrically conducting layers (20) of each core (2) are physically in contact with each other along the length of the first subsection (1B1).

5. The high voltage AC cable (1) according to any one of the above claims, wherein the second layers (5) are terminated as an open ended termination at a distal end (9) of the first section (1A) of the cable (1).

6. The high voltage AC cable (1) according to any one of the above claims, wherein the electrically conducting layer (20) comprises a metallic tape wound helically outside of the third layer (6B) of the first subsection (1B1).

7. The high voltage AC cable (1) according to any one of the above claims, wherein the electrically conducting layer (20) comprises a metallic mesh applied outside of the third layer (6B) of the first subsection (1B1).

8. The high voltage AC cable (1) according to any one of the above claims, wherein the first subsection (1B1) of the second section (1B) has a length of typically 1 - 500 meters.

9. The high voltage AC cable (1) according to any one of the above claims, wherein the electrically conducting layer (20) is corrosion resistant.

## Patentansprüche

1. Hochspannungs-Wechselstromkabel (1), wobei das Kabel (1) eine Vielzahl von Kabeladern (2) umfasst, wobei jede Kabelader (2) umfasst:
- einen zentralen, elektrischen Leiter (3);
- eine erste, elektrisch isolierende Schicht (4), die radial außerhalb des elektrischen Leiters (3) angeordnet ist;
- eine zweite, elektrisch leitende Schicht (5), die radial außerhalb der ersten Schicht (4) angeordnet ist;
- eine dritte Schicht (6A, 6B), die radial außerhalb der zweiten Schicht (5) angeordnet ist;
wobei ein erster Abschnitt (1A) des Kabels (1) mit einem zweiten Abschnitt (1B) des Kabels (1) an einem Verbindungspunkt (CP) verbunden ist, wobei
- der erste Abschnitt (1A) so angeordnet ist, dass er einem Landfallbereich ausgesetzt ist, und der zweite Kabelabschnitt (1B) so angeordnet ist, dass er einem Unterwasserbereich ausgesetzt ist;
- der zweite Abschnitt (1B) einen ersten Unterabschnitt (1B1) proximal zum Verbindungspunkt (CP) und einen zweiten Unterabschnitt (1B2) distal zum Verbindungspunkt (CP) umfasst;
- die dritte Schicht (6B) des zweiten Abschnitts (1B) eine halbleitende Schicht ist,
**dadurch gekennzeichnet, dass**
- jede Kabelader (2) eine elektrisch leitende Schicht (20) umfasst, die radial außerhalb der dritten Schicht (6B) nur in dem ersten Unterabschnitt (1B1) des zweiten Abschnitts (1B) des Kabels (1) angeordnet ist, und
- dadurch, dass die elektrisch leitenden Schichten (20) jeder Ader (2) elektrisch miteinander verbunden sind, wobei die elektrisch leitenden Schichten (20) in direktem Kontakt mit der dritten Schicht (6B) stehen, die wiederum in Kontakt mit der zweiten Schicht (5) steht.

2. Hochspannungs-Wechselstromkabel (1) nach Anspruch 1, wobei die dritte Schicht (6A) des ersten Abschnitts (1A) eine elektrisch isolierende Schicht oder eine halbleitende Schicht ist.

3. Hochspannungs-Wechselstromkabel (1) nach Anspruch 1 oder 2, wobei die elektrisch leitenden Schichten (20) jeder Ader (2) an einem oder mehreren Kontaktpunkten (POC) physikalisch miteinander in Kontakt stehen.

4. Hochspannungs-Wechselstromkabel (1) nach einem der vorstehenden Ansprüche, wobei die elektrisch leitenden Schichten (20) jeder Ader (2) entlang der Länge des ersten Unterabschnitts (1B1) physikalisch miteinander in Kontakt stehen.

5. Hochspannungs-Wechselstromkabel (1) nach einem der vorstehenden Ansprüche, wobei die zweiten Schichten (5) an einem distalen Ende (9) des ersten Abschnitts (1A) des Kabels (1) als offene Endabschlüsse ausgebildet sind.

6. Hochspannungs-Wechselstromkabel (1) nach einem der vorstehenden Ansprüche, wobei die elektrisch leitende Schicht (20) ein metallisches Band umfasst, das spiralförmig außerhalb der dritten Schicht (6B) des ersten Unterabschnitts (1B1) gewickelt ist.

7. Hochspannungs-Wechselstromkabel (1) nach einem der vorstehenden Ansprüche, wobei die elektrisch leitende Schicht (20) ein metallisches Geflecht umfasst, das außerhalb der dritten Schicht (6B) des ersten Unterabschnitts (1B1) angebracht ist.

8. Hochspannungs-Wechselstromkabel (1) nach einem der vorstehenden Ansprüche, wobei der erste Unterabschnitt (1B1) des zweiten Abschnitts (1B) eine Länge von typischerweise 1 - 500 Metern aufweist.

9. Hochspannungs-Wechselstromkabel (1) nach einem der vorstehenden Ansprüche, wobei die elektrisch leitende Schicht (20) korrosionsbeständig ist.

## Revendications

1. Câble CA haute tension (1), comprenant plusieurs âmes (2), chaque âme (2) comprenant :
- un conducteur électrique central (3) ;
- une première couche électriquement isolante (4) disposée radialement à l'extérieur du conducteur électrique (3) ;
- une deuxième couche électriquement conductrice (5) disposée radialement à l'extérieur de la première couche (4) ;
- une troisième couche (6A, 6B) disposée radialement à l'extérieur de la deuxième couche (5) ;
une première section (1A) du câble (1) étant connectée à une deuxième section (1B) du câble (1) en un point de connexion (CP),
- la première section (1A) étant disposée de manière à être exposée à une zone d'atterrissement et la deuxième section (1B) étant disposée de manière à être exposée à une zone sous-marine ;
- la deuxième section (1B) comprend une première sous-section (1B1) à proximité du point de connexion (CP) et une deuxième sous-section (1B2) à distance de ce point de connexion (CP);
- la troisième couche (6B) de la deuxième section (1B) est une couche semi-conductrice **caractérisée en ce que**
- chaque âme de câble (2) comprend une couche électriquement conductrice (20) disposée radialement à l'extérieur de la troisième couche (6B) uniquement dans la première sous-section (1B1) de la deuxième section (1B) du câble (1),
et **en ce que**
les couches électriquement conductrices (20) de chaque âme (2) sont connectées électriquement les unes aux autres, les couches électriquement conductrices (20) sont en contact direct avec la troisième couche (6B), qui est en contact avec la deuxième couche (5).

2. Le câble CA haute tension (1) selon la revendication 1, dans lequel la troisième couche (6A) de la première section (1A) est une couche électriquement isolante ou une couche semi-conductrice.

3. Le câble CA haute tension (1) selon la revendication 1 ou 2, dans lequel les couches électriquement conductrices (20) de chaque âme (2) sont physiquement en contact les unes avec les autres en un ou plusieurs points de contact (POC).

4. Le câble CA haute tension (1) selon l'une quelconque des revendications ci-dessus, dans lequel les couches électriquement conductrices (20) de chaque âme (2) sont physiquement en contact les unes avec les autres sur la longueur de la première sous-section (1B1).

5. Le câble CA haute tension (1) selon l'une quelconque des revendications ci-dessus, dans lequel les secondes couches (5) sont terminées par une terminaison ouverte à une extrémité distale (9) de la première section (1A) du câble (1).

6. Le câble CA haute tension (1) selon l'une quelconque des revendications ci-dessus, dans lequel la couche électriquement conductrice (20) comprend un ruban métallique enroulé en hélice à l'extérieur de la troisième couche (6B) de la première sous-section (1B1).

7. Le câble CA haute tension (1) selon l'une quelconque des revendications ci-dessus, dans lequel la couche électriquement conductrice (20) comprend un treillis métallique appliqué à l'extérieur de la troisième couche (6B) de la première sous-section (1B1).

8. Le câble CA haute tension (1) selon l'une quelconque des revendications ci-dessus, dans lequel la première sous-section (1B1) de la deuxième section (1B) a une longueur typiquement de 1 à 500 mètres.

9. Le câble CA haute tension (1) selon l'une quelconque des revendications ci-dessus, dans lequel la couche électriquement conductrice (20) est résistante à la corrosion.
